# EUROPÄISCHE PATENTANMELDUNG

(11) **EP 3 696 753 A1**
(43) Veröffentlichungstag der Anmeldung: **19.08.2020**
(21) Anmeldenummer: 19156909.4
(22) Anmeldetag: 13.02.2019
(51) Int. Cl.: G06Q 10/08

(54) **ÜBERWACHUNGSMODUL, ÜBERWACHUNGSSYSTEM UND VERFAHREN ZUR ZUSTANDSÜBERWACHUNG BEWEGLICHER TRANSPORTGÜTER**

(71) Anmelder: Cyber Transport Control GmbH, 38112 Braunschweig (DE)
(72) Erfinder: Dr. Jahn, Sascha, 38547 Allerbüttel (DE)
(74) Vertreter: Gramm, Lins & Partner Patent- und Rechtsanwälte PartGmbB

(57) **Zusammenfassung**

Die Erfindung betrifft ein Überwachungsmodul zur Zustandsüberwachung von beweglichen Transportgütern, wobei das Überwachungsmodul aufweist:
- ein Gehäuse mit einer Befestigungseinrichtung, die zum Befestigen des Überwachungsmoduls an einem beweglichen Transportgut ausgebildet ist,
- eine Datenverarbeitungseinheit,
- ein oder mehrere Sensoren, die zum Erfassen von Zustandsparametern des beweglichen Transportgutes und/oder des Überwachungsmoduls ausgebildet und mit der Datenverarbeitungseinheit in Verbindung stehen, und
- einer Kommunikationseinheit, die zur drahtlosen Kurzdistanzübertragung ausgebildet ist,
- wobei das Überwachungsmodul eingerichtet ist, eine Zustandsnachricht mit einer dem Überwachungsmodul zugeordneten eindeutigen Kennung sowie den erfassten Zustandsparametern und/oder davon abgeleiteten Zustandsinformationen mittels der mit der Datenverarbeitungseinheit in Verbindung stehenden Kommunikationseinheit in zeitdiskreten Abständen im Broadcastverfahren mit einem drahtlosen Kurzdistanz-Übertragungsprotokoll auszusenden.

## Beschreibung

Die Erfindung betrifft ein Überwachungsmodul zur Zustandsüberwachung von beweglichen Transportgütern insbesondere im Bereich und der Verwendung der Logistik. Die Erfindung betrifft ebenso ein Überwachungssystem mit derartigen Überwachungsmodulen zur Zustandsüberwachung von beweglichen Transportgütern sowie ein Verfahren zur Zustandsüberwachung von beweglichen Transportgütern hierzu.

In fast jedem technischen und wirtschaftlichen Anwendungsgebiet ist es notwendig, Waren bzw. Güter von einem Ort zu einem nächsten Ort zu transportieren. Dies betrifft dabei nicht nur den Transport der Waren und Güter zwischen Standorten oder von einem Standort zum Endkunden, sondern auch die logistische Transportkette innerhalb eines Standortes.

So müssen hier beispielsweise temperaturkritische Waren und Güter während der gesamten Transportkette eine ununterbrochene Kühlkette aufweisen, um insbesondere Gefahren für Leib und Leben auf ein Minimum reduzieren zu können. Dies betrifft insbesondere Nahrungsmittel sowie medizinische Produkte. Hier ist es wünschenswert, dass für die einzelnen Transportgüter der Nachweis einer ununterbrochenen Kühlkette bis zum Bestimmungsort des jeweiligen Transportgutes gelingt, um so Herstellern und Logistikunternehmen die Möglichkeit zu schaffen, die Anforderungen an die Kühlkette zu dokumentieren und gegenüber ihren Abnehmern nachzuweisen. Es ist darüber hinaus auch wünschenswert, wenn eine Unterbrechung der Kühlkette so früh wie möglich in jedem Transportabschnitt erkannt werden kann, um so schnellstmöglich reagieren zu können und größere Schäden abwenden zu können.

Aber auch für andere Transportgüter ist es wünschenswert, innerhalb der gesamten Logistikkette eine Zustandsüberwachung für jedes einzelne Transportgut zu erhalten, sodass unter anderem auch erkennbar wird, wo sich konkret das jeweilige Transportgut gerade befindet. Eine lückenlose Überwachung des jeweiligen Transportgutes innerhalb der Transport- und Logistikkette erhöht die Effizienz und die Sicherheit und kann dazu beitragen, die Kosten für Transport und Lagerhaltung zu reduzieren.

Es ist daher Aufgabe der vorliegenden Erfindung, ein Überwachungssystem sowie ein Verfahren hierzu anzugeben, mit dem sich Transportgüter innerhalb der Transport- und Logistikkette lückenlos überwachen lassen.

Die Aufgabe wird mit dem Überwachungsmodul gemäß Anspruch 1, dem Überwachungssystem gemäß Anspruch 7 sowie dem Verfahren zur Zustellungsüberwachung gemäß Anspruch 13 erfindungsgemäß gelöst.

Gemäß Anspruch 1 wird ein Überwachungsmodul zur Zustandsüberwachung von beweglichen Transportgütern vorgeschlagen, dass ein Gehäuse mit einer Befestigungseinrichtung aufweist, die zum Befestigen des Überwachungsmoduls an einem beweglichen Transportgut ausgebildet ist. In dem Gehäuse des Überwachungsmoduls befindet sich eine Datenverarbeitungseinheit, die in Form einer mikroprozessorgesteuerten Recheneinheit (CPU) ausgebildet sein kann. Ein oder mehrere Sensoren stehen dabei mit der Datenverarbeitungseinheit in kommunikativer Verbindung, wobei die Sensoren zum Erfassen von Zustandsparametern des beweglichen Transportgutes und/oder des Überwachungsmoduls ausgebildet sind. Derartige Sensoren können beispielsweise Temperatursensoren zum Erfassen der aktuellen Ist-Temperatur sein, Bewegungs- und/oder Beschleunigungssensoren sein, um eine Bewegung des Überwachungsmoduls oder des Transportgutes, in dem das Überwachungsmoduls angeordnet ist, sein oder andere Sensortypen, die physikalische Parameter des Transportgutes und/oder des Überwachungsmoduls erfassen können. Als Sensoren im Sinne der vorliegenden Erfindung werden im Übrigen auch Detektionseinrichtungen verstanden, die beispielsweise die Position mittels GNSS ermitteln.

Des Weiteren ist eine Kommunikationseinheit vorgesehen, die jedenfalls mit der Datenverarbeitungseinheit in kommunikativer Verbindung steht und zur drahtlosen Kurzdistanzübertragung ausgebildet ist. Die Datenverarbeitungseinheit ist nun so eingerichtet, dass sie die von den Sensoren erfassten Zustandsparameter erhält und in einem digitalen Datenspeicher hinterlegt bzw. zwischenspeichert. Die Datenverarbeitungseinheit ist des Weiteren eingerichtet, basierend auf den erfassten Zustandsparametern ggf. hieraus ableitbare Zustandsinformationen zu generieren, wie beispielsweise das Über- oder Unterschreiten eines gemessenen Ist-Wertes gegenüber vorgegebenen Soll-Werten. Diese Zustandsparameter bzw. daraus ableitbare Zustandsinformationen können dann von der Datenverarbeitungseinheit mittels der Kommunikationseinheit drahtlos ausgesendet werden.

Das Überwachungsmodul ist nun so eingerichtet, dass es eine Zustandsnachricht mit einer dem Überwachungsmodul zugeordneten eindeutigen Kennung sowie den erfassten Zustandsparametern und/oder davon abgeleiteten Zustandsinformationen mittels der mit der Datenverarbeitungseinheit in Verbindung stehenden Kommunikationseinheit in diskreten Abständen im Broadcast-Verfahren mit einem drahtlosen Kurzdistanz-Übertragungsprotokoll aussenden kann.

Demzufolge sendet das Überwachungsmodul, welches an einem Transportgut angeordnet ist, regelmäßig in zeitdiskreten Abständen eine Zustandsnachricht aus, welche eine eindeutige Kennung enthält sowie die erfassten Zustandsparameter und/oder davon abgeleitete Zustandsinformationen. Diese Zustandsnachricht wird dabei im Broadcast-Verfahren mittels eines Kurzdistanz-Übertragungsprotokolls ausgesendet, sodass keine gerichtete Verbindung zu einer Gegenstelle aufgebaut werden muss. Vielmehr sendet das Überwachungsmodul seine Zustandsnachricht aus und wartet dann, sofern keine anderen Ereignisse zwischenzeitlich geschehen, seine vorgegebenen Zeitraum ab, bis es erneut wieder eine Zustandsnachricht aussendet.

Mit einem derartigen Überwachungsmodul wird es nunmehr möglich, ein Transportgut hinsichtlich seines Zustandes innerhalb der Logistikkette bzw. innerhalb der Transportkette, und zwar vollständig, zu überwachen, ohne das befürchtet werden muss, dass eine elektrische Energieversorgung, welche die Datenverarbeitungseinheit und die daran angeschlossenen Einheiten mit Strom versorgt, vor dem Ende der Transportkette zur Neige geht. Denn durch das Aussenden der Zustandsnachrichten im Broadcast-Verfahren in zeitdiskreten Abständen mit einem drahtlosen Kurzdistanz-Übertragungsprotokoll kann der Energieverbrauch des Überwachungsmoduls auf ein Minimum reduziert werden. Denn die Kommunikationseinheit stellt mit einen der größten Energieverbraucher eines derartigen Überwachungsmoduls dar, wobei ohne eine Kommunikationseinheit eine ausreichende und vor allem echtzeitfähige Zustandsüberwachung nicht möglich wäre. Durch das erfindungsgemäße Aussenden der Zustandsnachrichten wird jedoch der Energieverbrauch einer derartigen Kommunikationseinheit auf ein wesentliches Minimum beschränkt, sodass ein derartiges Überwachungsmodul seine Überwachungsaktivität für einen hinreichend langen Zeitraum aufrechterhalten kann und somit auch längere Transportketten bzw. Logistikketten überwachen kann.

Eine derartige Reduzierung des Energieverbrauches ist notwendig, da ein derartiges Überwachungsmodul lediglich Abmessungen im wenigen Zentimeterbereich aufweist. So hat es sich als vorteilhaft herausgestellt, wenn ein derartiges Überwachungsmodul inklusive Gehäuse eine im Wesentlichen flächige Ausdehnung von weniger als 10 x 10 Zentimeter, vorzugsweise von weniger als 5 x 5 Zentimeter hat. Bei derartigen Abmessungen ist es jedoch nicht möglich, große und in der Regel auch schwere Batterien bzw. Akkumulatoren zwecks Energieversorgung vorzusehen. Daher ist es vorteilhaft, wenn das Überwachungsmodul eine Energieversorgung zur elektrischen Energieversorgung der Datenverarbeitungseinheit hat, die nicht größer ist als eine handelsübliche AA-Batterie, vorzugsweise nicht größer als eine AAA-Batterie ist. Vorteilhafterweise wird für die elektrische Energieversorgung eine Knopfbatterie bzw. eine Knopfzelle verwendet, bei denen der Durchmesser kleiner ist als die Höhe der Knopfzelle. Da bei der Verwendung derartiger Energieversorgungseinheiten die maximal zu speichernde elektrische Energie sehr stark begrenzt ist, kann durch das erfindungsgemäße Aussenden der Zustandsnachrichten hier eine maximale Laufzeit eines solchen Überwachungsmoduls realisiert werden, sodass auch bei sehr kleinen Abmessungen, die sich insbesondere für kleinteilige Transportgüter besonders eignen, auch lange Transport- und Logistikketten überwachen lassen. Dabei kann das Überwachungsmodul nicht nur Zustandsparameter des beweglichen Transportgutes erfassen, sondern auch Zustandsparameter des Überwachungsmoduls selber, wie beispielsweise Defekte, Ladezustände der Energieversorgung oder andere für den Betrieb wesentliche Zustandsparameter.

Erfasst werden können diese von den Überwachungsmodulen ausgesendeten Zustandsnachrichten von Abschnittskontrolleinrichtungen, die später im Detail noch erläutert werden. Derartige Abschnittskontrolleinrichtungen können fest installierte Infrastruktureinheiten sein, welche die gesamte Transportkette bzw. Prozesskette in einzelne Transport- und Prozessabschnitte unterteilen. Derartige Abschnittskontrolleinrichtungen können aber auch mobile Endgeräte, wie beispielsweise Smartphones, sein, welche dazu eingerichtet sind, die von den Überwachungsmodulen ausgesendeten Zustandsnachrichten zu empfangen und dem Benutzer dann entsprechende Informationen des Transportgutes bzw. des jeweiligen Überwachungsmodules anzuzeigen.

Vorteilhafterweise werden sämtliche in den Zustandsnachrichten enthaltenen Informationen an eine zentrale Auswerteeinheit übermittelt, in der jedes Überwachungsmodul mit seiner entsprechenden eindeutigen Kennung identifizierbar ist und in der ggf. dann die Zuordnung eines Überwachungsmoduls zu einem Transportgut, welches selber über eine entsprechende ID identifizierbar ist, enthalten ist. Durch die zentrale Auswerteeinheit kann dann jedes Transportgut auf seiner Transportkette hinsichtlich seines Zustandes überwacht und überprüft werden. Dabei können die von den Sensoren erfassten Zustände zu jedem einzelnen Transportgut dargestellt werden, wie beispielsweise die Temperatur oder die Tatsache, dass sich das Transportgut in einer Bewegungsphase befindet oder in einer Ruhephase.

In einer Ausführungsform ist das Überwachungsmodul eingerichtet, die Zustandsnachricht mittels der mit der Datenverarbeitungseinheit in Verbindung stehenden Kommunikationseinheit durch sogenannte Bluetooth-Advertise-Nachrichten des Bluetooth-Übertragungsprotokolls, vorteilhafterweise des Bluetooth-Low-Energy-Übertragungsprotokolls, auszusenden.

In einer weiteren Ausführungsform ist das Überwachungsmodul mittels der Datenverarbeitungseinheit eingerichtet, die zeitdiskreten Abstände und/oder eine Intensität der Überwachungsaktivität des Überwachungsmoduls selbständig festzulegen und gegenüber einem zuvor eingestellten Wert zu verändern. Die zeitdiskreten Abstände sowie die Intensität der Überwachungsaktivität ist demzufolge variabel.

Dabei können die zeitdiskreten Abstände und/oder die Intensität der Überwachungsaktivität in Abhängigkeit von einem erfassten Zustandsparameter und/oder einer davon abgeleiteten Zustandsinformation festgelegt werden. Wird beispielsweise die Temperatur als Zustandsparameter durch das Überwachungsmodul und den darin enthaltenen Sensoren erfasst und wird durch die Datenverarbeitungseinheit festgestellt, dass die Temperatur oberhalb eines vorgegebenen Schwellwertes liegt, so können die zeitdiskreten Abstände verkürzt werden, um so die Frequenz des Aussendens der Zustandsnachrichten zu erhöhen. Gleichzeitig kann die Überwachungsaktivität erhöht werden, d.h. die Temperatur wird mit Hilfe der Sensoren nunmehr mit einer erhöhten Frequenz abgefragt. Zwar geht dies zu Lasten des Energieverbrauches, allerdings wurde durch das Überwachungsmodul auch ein Zustand detektiert, der als Vorkommnis in der Überwachung wahrgenommen werden sollte. Durch die Anpassung der zeitdiskreten Abstände sowie der Überwachungsintensität kann dem Vorliegen eines Vorkommnisses in der Überwachung Rechnung getragen werden.

Des Weiteren ist es denkbar, dass die zeitdiskreten Abstände und/oder die Überwachungsintensität in Abhängigkeit von einer aus einer sensorisch erfassten Bewegungsinformation ermittelten Bewegungs- und/oder Ruhephase des Transportgutes festgelegt wird. Werden mit Hilfe der Sensoren des Überwachungsmoduls beispielsweise über einen längeren Zeitraum (vorgegebener Zeitraum) keine Bewegungen des Überwachungsmoduls registriert, so kann davon ausgegangen werden, dass sich das Überwachungsmodul mitsamt seinem zugeordneten Transportgut in einer Ruhephase (keine Bewegung) befindet, in der die Überwachungsaktivität und die Frequenz des Aussendens der Zustandsnachrichten verringert werden kann. Wird über einen gewissen Zeitraum hinweg eine Bewegung durch das Überwachungsmodul registriert, so wird von einer sogenannten Bewegungsphase ausgegangen, d.h. das Überwachungsmodul wird mitsamt seinem Transportgut innerhalb der gesamten Logistikkette bewegt. In diesem Fall kann die Überwachungsintensität sowie die Frequenz des Aussendens der Zustandsnachrichten erhöht werden, hierdurch wird es möglich, das Überwachungsmodul hinsichtlich der Bewegungs- und/oder Ruhephasen innerhalb der gesamten Transportkette so zu steuern, dass die Wach- und Schlafphasen des Überwachungsmoduls an die Bewegungs- und/oder Ruhephasen des Transportgutes innerhalb der Logistikkette automatisch angepasst wird. Denn es hat sich gezeigt, dass eine dauerhafte Überwachung innerhalb einer Ruhephase mit einer deutlich niedrigeren Frequenz durchgeführt werden kann. Hierdurch kann der Energieverbrauch deutlich gesenkt werden.

Des Weiteren sind die Bewegungsphasen meist jene Abschnitte innerhalb der Logistikkette, bei denen das Überwachungsmodul durch das Überwachungssystem hinsichtlich seiner Position verfolgt (getrackt) wird, wobei es gerade bei den Bewegungsphasen häufig zu sogenannten Gefahrenübergängen kommt, d.h. es kommt zu einem Übergang des Transportgutes von einem ersten Prozessbeteiligten zu einem zweiten Prozessbeteiligten. In dieser Phase ist eine erhöhte Zustandsüberwachung wünschenswert. Des Weiteren benötigt das später noch gezeigte übergeordnete Überwachungssystem zur Detektion der Position und der Bewegungsrichtung in kurzen Abständen die Zustandsnachrichten, sodass innerhalb einer Bewegungsphase das Überwachungsmodul mit erhöhter Frequenz die Zustandsnachrichten aussenden sollte.

Des Weiteren ist es denkbar, dass die diskreten Zeitabstände und/oder die Überwachungsaktivität in Abhängigkeit von einer Eigenschaft eines Transport- und/oder Prozessabschnittes, innerhalb dessen sich das Überwachungsmodul befindet, festgelegt wird. Hat das Überwachungsmodul durch eine entsprechende Nachricht einer Abschnittskontrolleinrichtung, die diesem Transport- und/oder Prozessabschnitt zugeordnet ist, empfangen, so ist das Überwachungsmodul eingerichtet, aus dieser Nachricht die Eigenschaft des Transport- und/oder Prozessabschnittes zu ermitteln und festzustellen, dass sich das Überwachungsmodul innerhalb dieses Prozessabschnittes befindet. Basierend auf der Eigenschaft werden nun die zeitdiskreten Abstände festgelegt und/oder die Überwachungsintensität eingestellt.

Hat das Überwachungsmodul beispielsweise festgestellt, dass es sich in einem Kühlhaus befindet, was sie anhand einer empfangenen Nachricht einer Abschnittskontrolleinrichtung identifiziert hat, so kann die Frequenz des Aussendens der Zustandsnachrichten stark reduziert werden und darüber hinaus die Überwachungsaktivität ebenfalls stark reduziert werden, da hier auch davon auszugehen ist, dass sich innerhalb dieses Transport- und/oder Prozessabschnittes die Temperatur nicht so schnell verändern wird, dass die Gefahr bestünde, ein entsprechendes eingestelltes Vorkommnis (Abweichung vom vorgegebenen Soll-Wert) unentdeckt bleibt. Gerade in kalten Prozessabschnitten kann so der Energieverbrauch auf ein Minimum reduziert werden und hierdurch die Batteriekapazität geschont werden.

In einer weiteren Ausführungsform ist das Überwachungsmodul eingerichtet, einen bereits erwähnten Transport- und/oder Prozessabschnitt, innerhalb dessen sich das Überwachungsmodul gerade befindet, in Abhängigkeit von einer Abschnittskontrolleinrichtung ausgesendeten und von dem Überwachungsmodul empfangenen Abschnittskontrollnachricht zu identifizieren. Hierfür ist das Überwachungsmodul eingerichtet, mit Hilfe der Kommunikationseinheit zunächst eine derartige Abschnittskontrollnachricht einer Abschnittskontrolleinrichtung zu empfangen und dann basierend auf dem Inhalt der empfangenen Abschnittskontrollnachricht den entsprechenden Transport- und/oder Prozessabschnitt zu identifizieren. Dadurch wird es möglich, dass das Überwachungsmodul selbständig identifizieren kann, in welchem Abschnitt sich das Transportgut innerhalb der gesamten Transport- bzw. Logistikkette befindet. Wie bereits oben erwähnt, kann dann das Überwachungsmodul entsprechend darauf reagieren und geeignete Maßnahmen je nach identifizierten Transport- und/oder Prozessabschnitt durchführen.

In einer weiteren Ausführungsform weist das Überwachungsmodul eine optische Erkennungseinrichtung auf, die beispielsweise in Form einer LED ein Lichtzeichen (beispielsweise Dauerlicht oder Blinken) ggf. auch mit verschiedenen Farben, aussenden kann. Das Überwachungsmodul ist nun eingerichtet, mittels der Kommunikationseinheit eine Identifikationsnachricht, die beispielsweise von einer Abschnittskontrolleinrichtung ausgesendet wurde, zu empfangen und in Abhängigkeit von der empfangenen Identifikationsnachricht die optische Erkennungseinrichtung zur optischen Identifikation des Überwachungsmoduls anzusteuern.

Wird es beispielsweise notwendig, innerhalb eines Transport- und/oder Prozessabschnittes ein bestimmtes Transportgut zu identifizieren, so kann an einer besagten Abschnittskontrolleinrichtung (fest installiertes Infrastrukturelement wie Tablet oder ein mobiles Gerät wie beispielsweise Smartphone) das gewünschte Transportgut zur Identifikation ausgewählt werden, woraufhin die Abschnittskontrolleinrichtung einer entsprechenden Identifikationsnachricht aussendet. Alle in dem Transport- und/oder Prozessabschnitt befindlichen Überwachungsmodule empfangen nun diese Identifikationsnachricht und überprüfen, ob diese Identifikationsnachricht für das jeweilige Überwachungsmodul bestimmt ist (Vergleich der eindeutigen angefragten Kennung der Überwachungsmodule). Hat ein Überwachungsmodul festgestellt, dass die Identifikationsnachricht für das Überwachungsmodul bestimmt ist, so steuert es die optische Erkennungseinrichtung entsprechend so an, dass diese ein optisches Lichtsignal aussendet. So lässt sich das gewünschte Transportgut aus einer Vielzahl von in dem Transport- und/oder Prozessabschnitt befindlichen Transportgütern identifizieren.

Mit Hilfe der optischen Erkennungseinrichtung wird es darüber hinaus auch möglich, verschiedenste Überwachungsmodule zu identifizieren, wenn diese noch nicht mit dem jeweiligen Transportgut verheiratet sind. Hierfür wird an einer Abschnittskontrolleinrichtung ausgewählt, dass das nächste in der Liste befindliche Überwachungsmodul angezeigt werden soll, woraufhin eine Identifikationsnachricht ausgesendet wird und das angesprochene Überwachungsmodul ein optisches Erkennungszeichen aussendet. Dieses so ausgewählte Überwachungsmodul kann nun mit dem gewünschten Transportgut verknüpft werden, um so die Zustandsüberwachung zu beginnen. Demzufolge ist dieser Schritt des Zuordnens des Überwachungsmoduls zu dem jeweiligen Transportgut ganz am Anfang der gesamten Transport- und/oder Logistikkette zu finden.

Darüber hinaus wird es mit der optischen Erkennungseinrichtung denkbar, dass im Bereich der chaotischen Lagerhaltung entsprechend diejenigen Transportgüter kommissioniert werden, die zur Bearbeitung des Auftrages notwendig sind. Hierfür kann jedes Transportgut (Kommissionsgut), entsprechend wie vorstehend beschrieben, mit Hilfe des Überwachungsmoduls identifiziert werden.

Die Aufgabe wird im Übrigen auch mit dem Überwachungssystem zur Zustandsüberwachung von beweglichen Transportgütern wie vorstehend genannt gelöst, wobei das Überwachungssystem eine Vielzahl von Überwachungsmodulen hat, die jeweils ein Gehäuse mit einer Befestigungseinrichtung zum Befestigen des Überwachungsmoduls an einem beweglichen Transportgut, einer Datenverarbeitungseinheit, ein oder mehrere Sensoren zum Erfassen von Zustandsparametern des beweglichen Transportgutes und/oder des Überwachungsmoduls selbst sowie eine Kommunikationseinheit zur drahtlosen Kurzdistanzübertragung haben. Jedes Überwachungsmoduls ist dabei eingerichtet, eine Zustandsnachricht mit einer dem Überwachungsmodul zugeordneten eindeutigen Kennung sowie den erfassten Zustandsparametern und/oder davon abgeleiteten Zustandsinformationen mittels der mit der Datenverarbeitungseinheit in Verbindung stehenden Kommunikationseinheit auszusenden. Derartige Überwachungsmodule können beispielsweise solche Überwachungsmodule sein, wie sie vorstehend bereits ausführlich beschrieben wurden.

Das Überwachungssystem weist des Weiteren eine Mehrzahl von Abschnittskontrolleinrichtungen auf, die jeweils einem Transport- und/oder Prozessabschnitt zugeordnet sind und die jeweils eine Datenverarbeitungseinheit und eine Kommunikationseinheit zum drahtlosen Kommunizieren mit den Überwachungsmodulen haben. Solche Abschnittskontrolleinrichtungen können fest installierte Infrastruktureinrichtungen innerhalb der gesamten Transport- und/oder Logistikkette sein. Derartige Abschnittskontrolleinrichtungen können aber auch mobile Geräte sein, wie beispielsweise Smartphones mit einer entsprechenden Programmsteuerung.

Die Abschnittskontrolleinrichtungen sind nun zum Empfang der von den Überwachungsmodulen ausgesendeten Zustandsnachrichten und zum Überwachen des dem jeweiligen Senden im Überwachungsmodul zugeordneten Transportgutes in Abhängigkeit von den erfassten Zustandsparametern und/oder den davon abgeleiteten Zustandsinformationen der empfangenen Zustandsnachricht eingerichtet. Die Abschnittskontrolleinrichtungen sind des Weiteren zum Aussenden von Abschnittskontrollnachrichten mittels ihrer jeweiligen Kommunikationseinheit ausgebildet, wobei die Überwachungsmodule so eingerichtet sind, dass sie eine ausgesendete Abschnittskontrollnachricht empfangen und in Abhängigkeit der empfangenen Abschnittskontrollnachricht feststellen können, welchem Transport- und/oder Prozessabschnitt die Abschnittskontrolleinrichtung zugeordnet ist und in Abhängigkeit davon in welchem Transport und/oder Prozessabschnitt sich die Abschnittskontrollnachricht empfangene Überwachungsmodul befindet.

Das Überwachungssystem hat demzufolge in Wirkverbindung mit den Überwachungsmodulen und den Abschnittskontrolleinrichtungen den Vorteil, dass zum einen die Überwachungsmodule selbständig eine Zustandsüberwachung durchführen und diese an die Abschnittskontrolleinrichtung übertragen. Des Weiteren können sich die Überwachungsmodule selbständig innerhalb der Transport- und/oder Logistikkette identifizieren und wissen, wo sie sich genau befinden, um so entsprechende Maßnahmen zum Zwecke der Zustandsüberwachung einzuleiten (Stichwort Energieverbraucheinsparung).

Die Abschnittskontrolleinrichtungen können dabei mit einer zentralen Auswerteeinheit in kommunikativer Verbindung stehen, um so die von den Abschnittskontrolleinrichtungen gesammelten Zustandsparameter und/oder davon abgeleitete Zustandsinformationen der einzelnen Überwachungsmodule an einer zentralen Stelle zu hinterlegen. Hierdurch wird es möglich, dass mit Hilfe der zentralen Auswerteeinheit ein Zugriff auf jedes Überwachungsmodul innerhalb der gesamten Transport- und/oder Logistikkette erfolgen kann und somit jedes einzelne Transportgut überwacht werden kann.

In einer Ausführungsform ist vorgesehen, dass die Abschnittskontrolleinrichtungen mehrere gerichtete Antennen zum Empfang der von den Überwachungsmodulen ausgesendeten Zustandsnachrichten haben, wobei mit Hilfe der gerichteten Antennen die Abschnittskontrolleinrichtungen eingerichtet sind, eine Bewegungsrichtung des sich durch den Transport- und/oder Prozessabschnitt bewegenden Transportgutes mit Überwachungsmodul in Abhängigkeit von einer Signalveränderung der durch die mehreren gerichteten Antennen empfangenen Zustandsnachrichten eines jeweiligen Überwachungsmoduls zu ermitteln. Durch die Veränderung der beispielsweisen Signalstärke kann festgestellt werden, in welche Bewegungsrichtung sich das Überwachungsmodul mit dem Transportgut durch den Transport- und/oder Prozessabschnitt bewegt, wodurch ein Tracking jedes einzelnen Transportgutes möglich wird. Wie bereits erwähnt, ist es hier vorteilhaft, wenn die Frequenz des Aussendens der Zustandsnachricht durch die Überwachungsmodule erhöht wird, was die Überwachungsmodule selbständig durch Erkennen einer entsprechenden Bewegungsphase festlegen können.

Durch das Aufzeichnen eines Bewegungsmusters wird es demzufolge möglich, das Transportgut lückenlos auch hinsichtlich seiner Bewegung zu überwachen und so jederzeit festzustellen, in welche Richtung es sich bewegt und in welchem Prozess- und/oder Transportabschnitt es sich befindet.

In einer weiteren Ausführungsform ist das Überwachungssystem eingerichtet, einen Übergang eines Transportgutes mit Überwachungsmodul von einem ersten Transport- und/oder Prozessabschnitt mit einer ersten Abschnittskontrolleinrichtung in einen zweiten Transport- und/oder Prozessabschnitt mit einer zweiten Abschnittskontrolleinrichtung in Abhängigkeit von dem Empfang mindestens einer Zustandsnachricht an der zweiten Abschnittskontrolleinrichtung zu erkennen. Gerade im Bereich der Übergänge erfolgt oftmals ein Gefahrenübergang, den es zu detektieren gilt, um so sicherstellen zu können, in welchem Transport- und/oder Prozessabschnitt sich das Überwachungsmodul befindet.

In einer weiteren vorteilhaften Ausführungsform sind ein, mehrere oder alle Abschnittskontrolleinrichtungen zum Aussenden von Abschnittskontrollnachrichten derart ausgebildet, dass die jeweilige Abschnittskontrollnachricht eine Eigenschaft des der jeweiligen Abschnittskontrolleinrichtung zugeordneten Transport- und/oder Prozessabschnitt enthalten, wobei ein, mehrere oder alle Überwachungsmodule eingerichtet sind, eine Eigenschaft des Transport- und/oder Prozessabschnittes, innerhalb dessen sich das Überwachungsmodul befindet, in Abhängigkeit von einer empfangenen Abschnittskontrollnachricht zu ermitteln und zeitdiskrete Abstände zwischen dem Aussenden der Zustandsnachrichten und/oder eine Intensität der Überwachungsaktivität des Überwachungsmoduls in Abhängigkeit von der ermittelten Eigenschaft des Transport- und/oder Prozessabschnittes, innerhalb dessen sich das Überwachungsmodul befindet, festzulegen.

In einer weiteren Ausführungsform ist eine, mehrere oder alle Abschnittskontrolleinrichtungen zum Aussenden einer Identifikationsnachricht zum Identifizieren eines Überwachungsmoduls und/oder einer Gruppe von Überwachungsmodulen ausgebildet, wobei die Überwachungsmodule eine optische Erkennungseinrichtung haben und weiterhin eingerichtet sind, mittels der Kommunikationseinheit die Identifikationsnachricht zu empfangen und in Abhängigkeit von der empfangenen Identifikationsnachricht die optische Erkennungseinrichtung zur optischen Identifikation des jeweiligen Überwachungsmoduls anzusteuern.

Soll mit Hilfe der Identifikationsnachricht eine Gruppe von Überwachungsmodulen identifiziert werden, so ist es denkbar, dass die zur Identifikation der Überwachungsmodule notwendige Kennung (bspw. eine ID oder eine Adresse) nur zum Teil vorgegeben wird, oder dass die Identifikationsnachricht eine Liste von Kennungen bzw. Adressen enthält, um die Überwachungsmodule zu identifizieren. Weist die Identifikationsnachricht nur einen Teil der Kennung bzw. Adresse auf, so reagiert jedes Überwachungsmodul auf die Identifikationsnachricht mit einer optischen Erkennung, wenn dieser Teil der Kennung bzw. Adresse zumindest teilweise mit der Kennung bzw. Adresse des jeweiligen Überwachungsmoduls übereinstimmt.

Zum Identifizieren von verschiedenen Überwachungsmodulen ist es denkbar, dass durch eine, mehrere oder alle Abschnittskontrolleinrichtungen ein Scann, bspw. ein Bluetooth-Scann durchführbar ist, woraufhin die Überwachungsmodule im Sendebereich der Abschnittskontrolleinrichtung die entsprechende Scann-Nachricht empfangen und sich entsprechend mit einer Antwort-Nachricht bei der Abschnittskontrolleinrichtung melden. Hierdurch wird es möglich, dass durch einen Scann (Netwerkscann) die im Sende- und Empfangsbereich befindlichen Überwachungsmodule identifiziert werden können. Die so identifizierten Überwachungsmodule können dann auf einem Display der Abschnittskontrolleinrichtung angezeigt werden.

Dabei kann jede Abschnittskontrolleinrichtung so ausgebildet sein, dass ein, mehrere oder alle durch den Scann identifizierten und auf dem Display angezeigten Überwachungsmodule durch eine Person ausgewählt werden können, wobei dann für jedes so ausgewählte Überwachungsmodul eine Identifikationsnachricht (jeweils einzeln oder als Gruppennachricht) ausgesendet wird. Basierend auf der oder den Identifikationsnachrichten wird dann bei den ausgewählten Überwachungsmodulen die optische Erkennungseinrichtung zur optischen Identifikation aktiviert.

Die hierbei verwendeten Kennungen bzw. Adressen können bspw. die MAC-Adresse sein.

In einer weiteren Ausführungsform hierzu ist ein Überwachungsmodul eingerichtet, mit Hilfe der optischen Erkennungseinrichtung einen optischen Code auszugeben, bspw. in Form von optischen Codemustern oder Blinkmustern. Die Abschnittskontrolleinrichtungen können nun so ausgebildet sein, dass ein durch ein Überwachungsmodul ausgegebener optischer Code mit Hilfe einer optischen Erfassungseinrichtung (bspw. ein Bildsensor oder eine Kamera) erfasst und die in dem optischen Code enthaltene Information extrahiert werden.

Ein einem durch die optische Erkennungseinrichtung ausgegebenen optischen Code können bspw. Kennungen bzw. Adresse (MAC-Adressen) enthalten sein, die dem den optischen Code ausgebenden Überwachungsmodul logisch zugeordnet sind. Hierdurch lassen sich bspw. Überwachungsmodule identifizieren, die in einer logischen Transporteinheit (bspw. Kiste oder Karton) zusammengefasst sind, wobei das den optischen Code ausgebende Überwachungsmodul an der Transporteinheit angeordnet ist. Durch das Erfassen des optischen Codes werden auf der Abschnittskontrolleinrichtung, die den optischen Code aufgenommen und die Informationen extrahiert hat, die in dem optischen Code enthaltenen Kennungen bzw. Adressen der Überwachungsmodule angezeigt, wobei dann wiederum ein einzelnes Überwachungsmodul durch die Abschnittskontrolleinrichtung auswählbar wäre.

Die Aufgabe wird im Übrigen auch mit dem Verfahren zur Zustandsüberwachung von beweglichen Transportgütern mittels eines Überwachungssystems wie vorstehend beschrieben gelöst, wobei zunächst ein Überwachungssystem wie vorstehend beschrieben einschließlich der Überwachungsmodule bereitgestellt wird. Die von den Überwachungsmodulen ausgesendeten Zustandsnachrichten werden dann durch wenigstens eine Abstandskontrolleinrichtung des Überwachungssystems empfangen und das dem jeweiligen sendenden Überwachungsmodul zugeordnete Transportgut wird dann in Abhängigkeit von den erfassten Zustandsparametern und/oder den davon abgeleiteten Zustandsinformationen der empfangenen Zustandsnachricht überwacht. Darüber hinaus werden mittels der Kommunikationseinheiten der Abschnittskontrolleinrichtungen entsprechende Abschnittskontrollnachrichten ausgesendet und von den Überwachungsmodulen empfangen, wobei durch die empfangenen Überwachungsmodule festgestellt wird, welchem Transport- und/oder Prozessabschnitt die Abschnittskontrolleinrichtung, welche die Abschnittskontrollnachricht ausgesendet hat, zugeordnet ist. In Abhängigkeit davon wird dann festgestellt, in welchem Transport- und/oder Prozessabschnitt sich das die Abschnittskontrollnachricht empfangene Überwachungsmodul befindet.

Die vorteilhaften Ausgestaltungen des Verfahrens entsprechen dabei den Funktionen und Abläufen des Überwachungssystems.

Die Erfindung wird anhand der Figuren beispielhaft erläutert. Es zeigen:
- Figur 1 -: schematischer Aufbau des erfindungsgemäßen Überwachungsmoduls;
- Figur 2 -: schematische Darstellung des Überwachungssystems;
- Figur 3 -: Darstellung eines gesamten Überwachungsablaufes bzw. Überwachungsverfahrens.

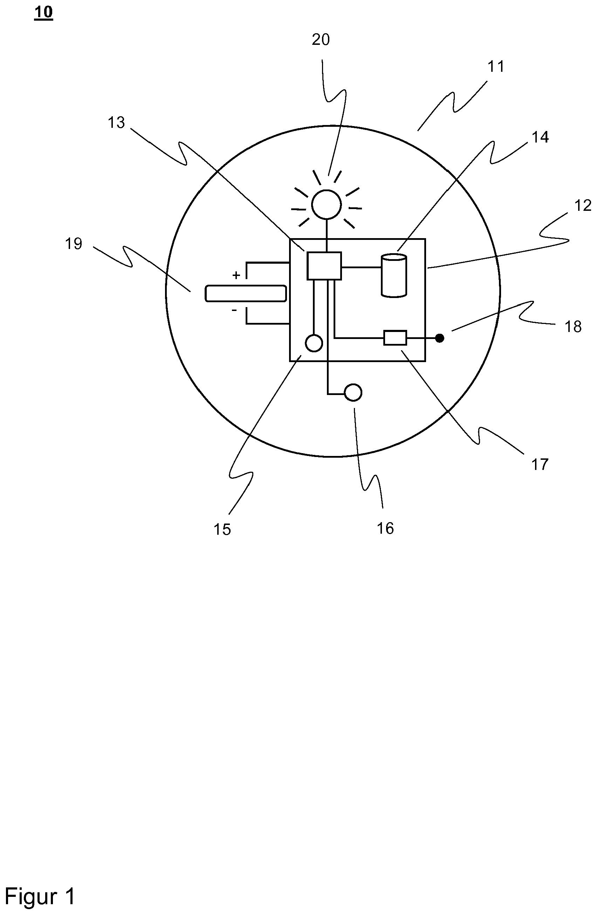

Figur 1 zeigt in einer schematischen Darstellung ein Überwachungsmodul 10, welches ein Gehäuse 11 und ein in dem Gehäuse 11 angeordnete Datenverarbeitungseinheit 12 hat. Die Datenverarbeitungseinheit 12 weist gattungsgemäß eine Recheneinheit (CPU) 13 auf, die eine Mikroprozessor bzw. Mikrocontroller gesteuerte Recheneinheit sein kann. Des Weiteren weist die Datenverarbeitungseinheit 12 einen Speicher 14 auf. In dem Speicher 14 können beispielsweise das auszuführende Computerprogramm sowie Konfigurationseinstellungen hinterlegt sein.

Des Weiteren weist die Datenverarbeitungseinheit 12 einen Sensor 15 in Form eines Bewegungs- bzw. Beschleunigungssensor auf, der integraler Bestandteil der Datenverarbeitungseinheit 12 sein kann. Denkbar ist allerdings auch, dass ein solcher Beschleunigungssensor 15 durch einen externen Sensor realisiert wird, der mit der Datenverarbeitungseinheit 12 verbunden wird.

Des Weiteren weist das Überwachungsmodul 10 einen weiteren Sensor 16 in Form eines Temperatursensors auf, der im Ausführungsbeispiel der Figur 1 in Form eines externen Sensors mit der Datenverarbeitungseinheit 12 verbunden wird. Letztlich kann das Überwachungsmodul eine Datenverarbeitungseinheit 12 aufweisen, die integral die entsprechenden Sensoren aufweist oder bei der spezielle Sensoren zusätzlich hinzugefügt werden können. Die Art der Anbindung der Sensoren an die Datenverarbeitungseinheit 12 ist dabei nicht beschränkt.

Schließlich weist die Datenverarbeitungseinheit 12 eine Kommunikationseinheit 17 auf, die zum Aussenden von Funksignalen mit Hilfe einer Antennenanordnung 18 ausgebildet ist.

Das Gehäuse 11 ist im Ausführungsbeispiel der Figur 1 in Form eines Hohlkörpers ausgebildet, der eine runde Grundform aufweist. Das Gehäuse 11 ist dabei derart ausgebildet, dass es geöffnet werden kann, um so an die im Inneren des Gehäuses 11 angeordnete Datenverarbeitungseinheit 12 zu gelangen. Dies dient dem leichten Austausch bzw. der Erweiterung von Hardwarekomponenten.

Das Gehäuse 11 eines solchen Überwachungsmoduls 10 kann eine Größe aufweisen, die kleiner ist als eine herkömmliche Kredit- oder Smartkarte und kann Abmessungen von weniger als 10 x 10 x 10 Zentimeter, vorzugsweise weniger als 5 x 5 x 5 Zentimeter aufweisen.

An dem Gehäuse 11 befindet sich des Weiteren eine nicht dargestellte Befestigungseinrichtung, um das Überwachungsmodul 10 an einem entsprechenden Transportgut zu befestigen. Eine solche Befestigungseinrichtung kann beispielsweise eine Öse sein, mit der das Gehäuse über einen Befestigungsdraht oder ein Befestigungsband an dem Transportgut befestigt wird. Denkbar ist aber auch, dass die Befestigungseinrichtung eine Klettverschlussvorrichtung ist, um so das Überwachungsmodul 10 insbesondere lösbar an dem Transportgut zu befestigen. Demzufolge ist die Befestigungseinrichtung grundsätzlich ausgebildet, das Gehäuse 11 lösbar und dennoch transportsicher an dem entsprechenden Transportgut zu befestigen.

Das Überwachungsmodul 10 ist mit Hilfe der Datenverarbeitungseinheit 12 nun so ausgebildet, dass mit Hilfe der Sensoren 15, 16 permanent Zustandsparameter des Transportgutes bzw. des Überwachungsmoduls erfasst werden. Im Ausführungsbeispiel der Figur 1 ist dies zum einen die Temperatur und zum anderen eine Information über mögliche Bewegungen bzw. Beschleunigungen des Überwachungsmoduls. Auch die Überwachung des Ladezustandes der Energieversorgung 19 kann als Zustandsparameter durch das Überwachungsmodul 10 erfasst werden.

Sämtliche erfassten Werte der Zustandsparameter werden dann in dem Speicher 14 hinterlegt, wobei die Datenverarbeitungseinheit so ausgebildet sein kann, anhand der erfassten Werte der Zustandsparameter entsprechende Zustandsinformationen hieraus abzuleiten. Derartige Zustandsinformationen können beispielsweise Informationen darüber sein, ob die Werte, die mit Hilfe des Überwachungsmoduls erfasst wurden, außerhalb eines vorgegebenen Gültigkeitsbereiches liegen. Derartige Vorkommnisse, die sich insbesondere negativ auf die gesamte Transportkette auswirken können, werden so bereits von dem jeweiligen Überwachungsmodul 10 entsprechend erkannt.

Um nun die erfassten Werte der Zustandsparameter und/oder die aus diesem erfassten Zustandsparametern abgeleiteten Zustandsinformationen mitzuteilen, ist die Datenverarbeitungseinheit 12 bzw. das Überwachungsmodul 10 in Verbindung mit der Kommunikationseinheit 17 dazu ausgebildet, eine Zustandsnachricht auszusenden, wobei das Aussenden der Zustandsnachricht in zeitdiskreten Abständen im Broadcast-Verfahren mit einem drahtlosen Kurzdistanz-Übertragungsprotokolls erfolgt. Ein solches Kurzdistanz-Übertragungsprotokoll kann beispielsweise das Bluetooth-Low-Energy-Protokoll sein, wobei die Zustandsnachrichten dann die in diesem Standard definierten Bluetooth-Advertise-Nachrichten sein können.

In diesen Zustandsnachrichten wird eine dem Überwachungsmodul 10 eindeutig zugewiesene Kennung (ID oder eine Adresse) hinterlegt sowie die erfassten Zustandsparameter und/oder davon abgeleitete Zustandsinformationen. Eine entsprechende Gegenstelle kann nun diese Zustandsnachrichten empfangen und auswerten, wobei aufgrund der eindeutigen Kennung dann die erfassten Zustandsparameter und/oder davon abgeleitete Zustandsinformationen dem jeweiligen Transportgut zugeordnet werden können.

Das Überwachungsmodul 10 kann des Weiteren dazu ausgebildet sein, basierend auf den erfassten Zuständen eigene Reaktionen auszuführen bzw. ein hieran angepasstes Verhalten aufzuweisen. Wird beispielsweise über einen vorgegebenen Zeitraum eine Ruhephase detektiert, d.h. es werden mit Hilfe des Beschleunigungssensors 15 keine Bewegungen des Transportgutes bzw. des Überwachungsmoduls 10 detektiert, so werden die zeitdiskreten Abstände zum Aussenden der Zustandsnachrichten vergrößert und somit die Frequenz des Aussendens der Zustandsnachrichten verringert. Gleichzeitig kann die Überwachungsaktivität des Temperatursensors 16 herabgesetzt werden, sodass nunmehr die Abtastfrequenz, mit der die Temperaturwerte von dem Temperatursensor 16 ausgelesen werden, verringert wird. All dies wird gemacht, um möglichst viel Energie der Energieversorgung 19 einzusparen und so die Lebensdauer des Überwachungsmoduls 10 zu verlängern.

Wird nunmehr jedoch eine Bewegungsphase detektiert, d.h. über einen gewissen Zeitraum hinweg wurden kontinuierliche Beschleunigungen durch den Sensor 15 gemessen, so wird die Frequenz des Aussendens der zeitdiskreten Abstände wieder erhöht und die Überwachungsaktivität gesteigert, d.h. die Abtastfrequenz der Sensoren wird erhöht.

Des Weiteren ist ein solches Überwachungsmodul 10 mittels der Kommunikationseinheit 17 dazu ausgebildet, entsprechende Abschnittskontrollnachrichten einer später noch gezeigten Abschnittskontrolleinrichtung zu empfangen, wodurch sich Informationen aus dem jeweiligen Transport- und/oder Prozessabschnitt, in dem sich das Überwachungsmodul 10 gerade befindet, herleiten lassen. Basierend auf derartigen Informationen bzgl. des aktuellen Transport- und/oder Prozessabschnittes kann das Überwachungsmodul wiederum entsprechende Maßnahmen ergreifen, wie beispielsweise das Anpassen der Aussendefrequenz der Zustandsnachrichten sowie der Anpassung der Überwachungsaktivität.

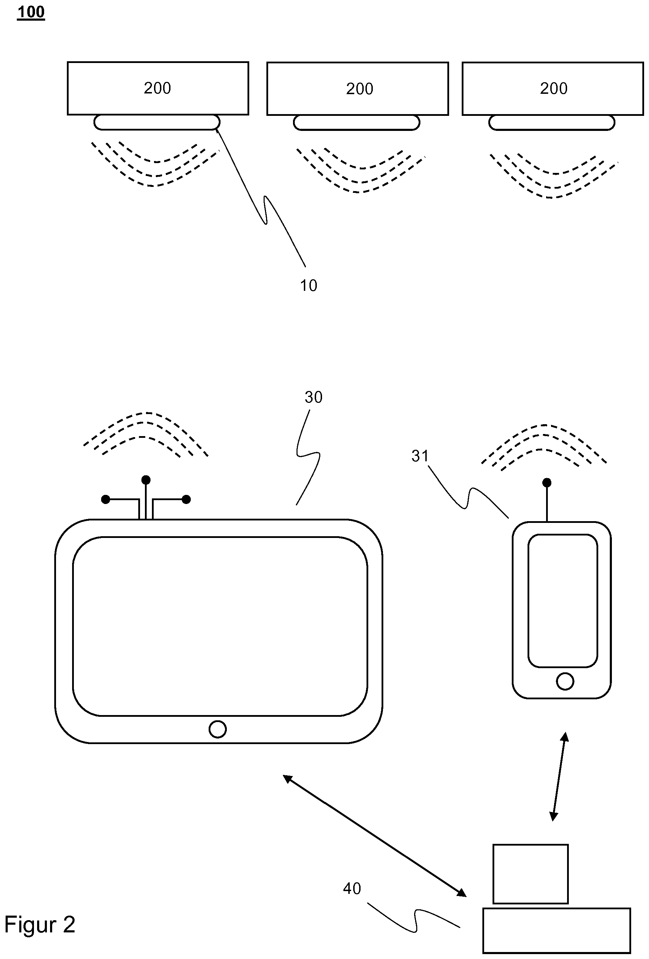

Figur 2 zeigt das erfindungsgemäße Überwachungssystem 100, das eine Mehrzahl von an einem jeweiligen Transportgut 200 angeordnete Überwachungsmodule 10 hat. Die Überwachungsmodule 10 können dabei so ausgebildet sein, wie sie in Figur 1 beschrieben sind. Des Weiteren weist das Überwachungssystem 100 im Ausführungsbeispiel der Figur 2 eine Abschnittskontrolleinrichtung 30 und 31 auf, wobei die Abschnittskontrolleinrichtung 30 eine fest installierte Infrastruktureinrichtung darstellt, während die Abschnittskontrolleinrichtung 31 ein mobiles Gerät darstellt. Bei der stationären Abschnittskontrolleinrichtung 30 kann es sich beispielsweise um ein entsprechend programmiertes Tablet bzw. berührungsempfindliches Großdisplaygerät handeln, während bei der mobilen Abschnittskontrolleinrichtung 31 es sich beispielsweise um ein Smartphone handeln kann.

Beide Abschnittskontrolleinrichtungen 30 stehen dabei mit einer zentralen Auswerteeinheit 40 in kommunikativer Verbindung.

Die Abschnittskontrolleinrichtungen 30 und 31 sind nun so ausgebildet, dass sie die von den Überwachungsmodulen 10 ausgesendeten Zustandsnachrichten, die in zeitdiskreten Abständen im Broadcast-Verfahren mittels eines drahtlosen Kurzdistanz-Übertragungsprotokolls ausgesendet werden, empfangen können, um so basierend auf der in den Zustandsnachrichten enthaltenen eindeutigen ID die jeweilige Zustandsnachricht einem entsprechenden Transportgut 200 zuordnen können und somit die in den Zustandsnachrichten enthaltenen Zustandsparameter bzw. abgeleitete Zustandsinformationen dem entsprechenden Transportgut 200 zuordnen können. Des Weiteren sind die Abschnittskontrolleinrichtungen 30 und 31 dazu eingerichtet, die von den Überwachungsmodulen 10 empfangenen Informationen bzgl. des jeweiligen Transportgutes 200 an die zentrale Auswerteeinheit 40 zu übermitteln. Dort ergibt sich schließlich ein vollständiges Lagebild sämtlicher Transportgüter 200.

Die Abschnittskontrolleinrichtungen 30 und 31 können dabei sogenannte Abschnittskontrollnachrichten aussenden, die von den Überwachungsmodulen 10 empfangen werden können, wobei in den Abschnittskontrollnachrichten Informationen bzgl. des Transport- und/oder Prozessabschnittes enthalten sind, zudem die jeweilige Abschnittskontrolleinrichtung zugeordnet ist. Diese Informationen können beispielsweise von den Überwachungsmodulen 10 dazu genutzt werden, entsprechende Reaktionen auszuführen.

Des Weiteren können die Abschnittskontrolleinrichtungen 30 und 31 sogenannten Identifikationsnachrichten aussenden, mit denen ein bestimmtes Überwachungsmodul 10 optisch identifiziert werden soll. Hierzu wird zunächst auf dem Display der jeweiligen Abschnittskontrolleinrichtung 30, 31 das jeweilige Überwachungsmodul 10 bzw. Transportgut 200 ausgewählt, woraufhin dann basierend auf der hinterlegten eindeutigen Kennung eine entsprechende Identifikationsnachricht ausgesendet wird, die diese entsprechende Kennung (beispielsweise ID, Adresse) beinhaltet. Die Identifikationsnachricht wird nun von sämtlichen in Reichweite befindlichen Überwachungsmodulen 10 empfangen, wobei nur dasjenige Überwachungsmodul 10 reagiert, welches die entsprechend in der Identifikationsnachricht enthaltene Kennung enthält.

Zurückkommend auf Figur 1, weist das Überwachungsmodul 10 weiterhin eine optische Erkennungseinrichtung 20 auf, die beispielsweise eine LED sein kann. Wird nun eine entsprechende Identifikationsnachricht empfangen und stimmt die entsprechende Kennung mit der eigenen Kennung überein, so steuert die Datenverarbeitungseinheit 12 des Überwachungsmoduls 10 die optische Erkennungseinrichtung 20 derart an, dass diese ein optisches Identifikationssignal aussendet. Dies kann beispielsweise ein Dauerleuchten, ein Blinken oder ähnliches sein.

Hierdurch lässt sich insbesondere bei einer Vielzahl von Transportgütern 200 mit jeweiligen Überwachungsmodulen 10 gezielt dasjenige Transportgut 200 identifizieren, das entsprechend ausgebildet wurde.

Darüber hinaus wird es mit den Identifikationsnachrichten auch möglich, gezielt mehrere gleiche oder ähnliche Güter zu identifizieren. Hierzu werden Identifikationsnachrichten ausgesendet, die mehrere Kennungen enthalten können, sei es in Form einer Liste oder sei es in Form einer logischen Zuordnung. So ist es denkbar, dass in der Identifikationsnachricht ein Teil der Adressen der Überwachungsmodule 10 enthalten ist, wobei alle diejenigen Überwachungsmodule, die den übermittelten Teil der Adresse enthalten, entsprechend ein optisches Signal aussenden.

Des Weiteren ist es denkbar, dass insbesondere die mobilen Abschnittskontrolleinrichtungen 31 ausgebildet sind, entsprechende maschinenlesbare optische Codes auszulesen, die sich beispielsweise an Transportboxen oder ähnlichem befinden. Der optische Code enthält dabei den Kennungsteil bzw. Adressteil der in der jeweiligen Transportbox enthaltenen Überwachungsmodule mitsamt den Transportgütern. Dies ist besonders dann vorteilhaft, wenn sich in einer Transportbox verschiedene Transportgüter befinden, sodass mit Hilfe verschiedener optischer maschinenlesbarer Codes immer eine Teilmenge dieser Transportgüter identifizierbar wird.

Mit Hilfe der optischen Erkennungseinrichtung lassen sich dabei auch Anwendungsfälle wie das "Pick-by-Light" oder das "Put-to-Light" realisieren, sodass sich hierdurch Kommissionierlisten abarbeiten lassen. Das zu kommissionierende Transportgut wird dabei entsprechend durch seine Erkennungseinrichtung identifiziert.

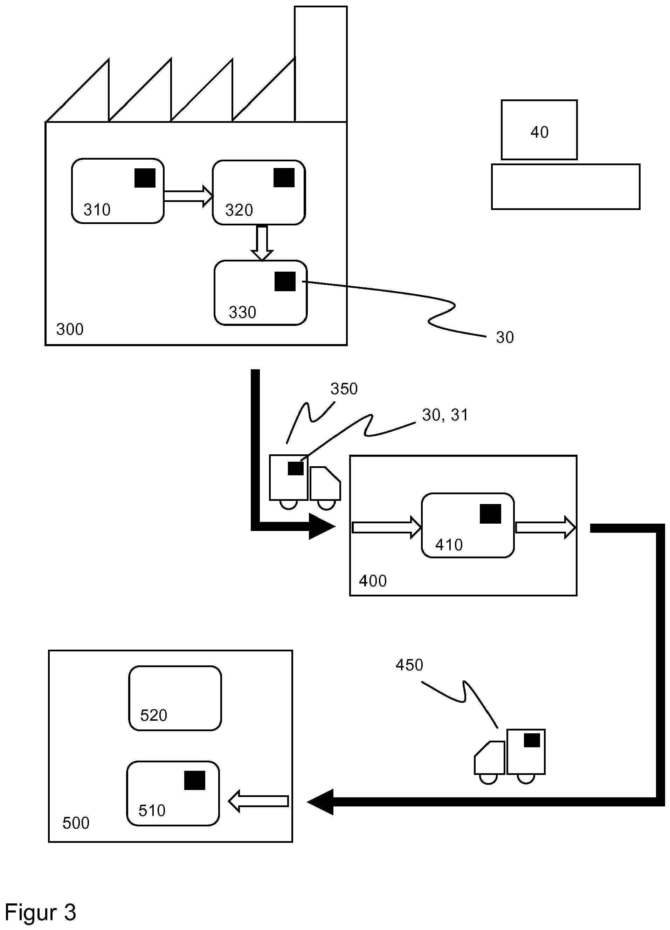

Figur 3 zeigt schließlich einen vollständigen Transportablauf, bei dem Transportgüter von einem Hersteller 300 über den Großhandel 400 zum Einzelhandel 500 transportiert werden sollen, wobei dies unter Berücksichtigung einer vollständigen Logistikkette erfolgt. Zunächst werden die Transportgüter beim Hersteller 300 in einer Produktionsstrecke 310 hergestellt. Dabei handelt es sich im Ausführungsbeispiel der Figur 3 um verderbliche Waren, die gekühlt werden müssen. In der Produktionsstrecke 310 ist die gesamte Produktion mit Hilfe von Abschnittskontrolleinrichtungen 30 überwacht, sodass am Ende der Produktionsstrecke 310 das hergestellte Produkt bzw. Transportgut mit einem jeweiligen Überwachungsmodul verknüpft wird. Anschließend erfolgt der Übergang des hergestellten Transportgutes zusammen mit dem angeordneten Überwachungsmodul in eine Kühlstrecke bzw. einen Kühlraum 320.

Im Kühlraum 320 befindet sich ebenfalls eine Abschnittskontrolleinrichtung 30, die dauerhaft die in dem Kühlabschnitt 320 befindlichen Transportgüter überwacht. Der Übergang von der Produktionsstrecke 310 zum Kühlabschnitt 320 lässt sich dabei anhand der Zustandsnachrichten identifizieren, die von den Abschnittskontrolleinrichtungen 30 empfangen werden. Somit weiß die jeweilige Abschnittskontrolleinrichtung 30, welches Überwachungsmodul 10 sich gerade in welchem Abschnitt befindet.

Sämtliche Daten werden dabei an die zentrale Auswerteeinheit 40 übermittelt, um so einen zentralen Zugriff auf die Daten zu ermöglichen.

Die in dem Kühlabschnitt 320 befindlichen Überwachungsmodule erhalten nun von der Abschnittskontrolleinrichtung 30 die Information, dass sie sich in einem Kühlraum befinden. Basierend auf dieser Eigenschaft dieses Transport- und/oder Prozessabschnittes verringern die Überwachungsmodule nun ihre Überwachungsintensität und verlängern darüber hinaus die zeitdiskreten Abstände zum Aussenden der Zustandsnachrichten, da innerhalb dieses Kühlraumes eine hohe Überwachungsfrequenz grundsätzlich nicht notwendig ist.

Nachdem die Transportgüter eine Weile im Kühlabschnitt 320 gelagert wurden, werden sie nun in einem Transportabschnitt 330 auf dem Weitertransport zum Großhandel 400 vorbereitet. Hierfür verlassen die Transportgüter den Kühlabschnitt 320 und werden in den Transportabschnitt 330 bewegt, was wiederum durch die im Transportabschnitt 330 befindliche Abschnittskontrolleinrichtung 30 detektiert wird. Die Überwachungsfrequenz sowie die Aussendefrequenz der zeitdiskreten Abstände wird nunmehr wieder erhöht, da sich in diesem Abschnitt 330 die Transportgüter grundsätzlich in Bewegung befinden und hier auch eine kritische Stelle in Bezug auf den Gefahrübergang vorhanden ist. Daher ist hier in diesem Bereich eine hohe Überwachungsfrequenz wünschenswert. Die Überwachungsmodule stellen dies selbständig fest und passen sich entsprechend ihrer Umgebung an, wobei die Überwachungsmodule dies anhand der jeweiligen Abschnittskontrolleinachricht des Transportabschnittes 330 erkennen.

Anschließend werden die Transportgüter auf ein Transportsystem, beispielsweise einen Lkw 350, verladen und zum Großhandel 400 bewegt. Auch der Lkw 350 weist eine entsprechende Abschnittskontrolleinrichtung 30 auf, um während des Transportes die Zustände der Transportgüter mit Hilfe der Überwachungsmodule überwachen zu können. Im Lkw 350 kann dies beispielsweise mit Hilfe eines Smartphones 31, wie in Figur 2 gezeigt, erfolgen.

Im Großhandel 400 werden die Transportgüter in einem Weiterverarbeitungsabschnitt 410 umverpackt und dann wiederum mit Hilfe eines Transportsystems 450, beispielsweise einem Lkw, zum Einzelhandel 500 transportiert. Auch in der Logistikstrecke zwischen Großhandel 400 und Einzelhandel 500 mit Hilfe des Lkws 450 werden die Überwachungsmodule entsprechend überwacht, wobei auch der Lkw 450 eine Abschnittskontrolleinrichtung 30 hat.

Beim Einzelhandel 500 werden die Transportgüter zunächst in einem Kühlabschnitt 510 zwischengelagert und gelangen dann anschließend in den Verkaufsraum bzw. Verkaufsabschnitt 520. Spätestens beim Übergang von dem Kühlabschnitt 510 zum Verkaufsabschnitt 520 werden die Überwachungsmodule entfernt, wobei im Kühlabschnitt 510 mit Hilfe einer Abschnittskontrolleinrichtung 30 noch eine entsprechende Überwachung stattfinden kann.

Es wird mit Hilfe der vorliegenden Erfindung somit möglich, den gesamten logistischen Transportweg lückenlos zu überwachen und dabei den Zustand des Transportgutes vollständig im Blick zu haben. Mit der vorliegenden Erfindung wird es im Übrigen auch möglich, andere Anwendungsfelder, wie beispielsweise medizinische Logistikketten (Stichwort Blutspenden) vollständig überwachen zu können und somit die Integrität des Transportgutzustandes sicherstellen zu können.

### Bezugszeichenliste:

- 10: - Überwachungsmodul
- 11: - Gehäuse
- 12: - Datenverarbeitungseinheit
- 13: - Recheneinheit
- 14: - Speicher
- 15: - Sensor/Beschleunigungssensor
- 16: - Sensor/Temperatursensor
- 17: - Kommunikationseinheit
- 18: - Antennenanordnung
- 19: - Energieversorgung
- 20: - Optische Erkennungseinrichtung
- 30: - Stationäre Abschnittskontrolleinrichtung
- 31: - Mobile Abschnittskontrolleinrichtung
- 40: - Zentrale Auswerteeinheit
- 100: - Überwachungssystem
- 200: - Transportgut
- 300: - Hersteller
- 310: - Produktionsstrecke/Produktionsabschnitt
- 320: - Kühlabschnitt
- 330: - Transportabschnitt
- 350: - Transportfahrzeug
- 400: - Großhandel
- 410: - Weiterverarbeitungsabschnitt
- 450: - Transportfahrzeug
- 500: - Einzelhandel
- 510: - Kühlabschnitt
- 520: - Verkaufsabschnitt

## Patentansprüche

1. Überwachungsmodul (10) zur Zustandsüberwachung von beweglichen Transportgütern, wobei das Überwachungsmodul aufweist:
- ein Gehäuse (11) mit einer Befestigungseinrichtung, die zum Befestigen des Überwachungsmoduls (10) an einem beweglichen Transportgut (200) ausgebildet ist,
- eine Datenverarbeitungseinheit (12),
- ein oder mehrere Sensoren (15, 16), die zum Erfassen von Zustandsparametern des beweglichen Transportgutes (200) und/oder des Überwachungsmoduls (10) ausgebildet und mit der Datenverarbeitungseinheit (12) in Verbindung stehen, und
- einer Kommunikationseinheit (17), die zur drahtlosen Kurzdistanzübertragung ausgebildet ist,
- wobei das Überwachungsmodul (10) eingerichtet ist, eine Zustandsnachricht mit einer dem Überwachungsmodul (10) zugeordneten eindeutigen Kennung sowie den erfassten Zustandsparametern und/oder davon abgeleiteten Zustandsinformationen mittels der mit der Datenverarbeitungseinheit (12) in Verbindung stehenden Kommunikationseinheit (17) in zeitdiskreten Abständen im Broadcastverfahren mit einem drahtlosen Kurzdistanz-Übertragungsprotokoll auszusenden.

2. Überwachungsmodul (10) nach Anspruch 1, **dadurch gekennzeichnet, dass** das Überwachungsmodul (10) eingerichtet ist, die Zustandsnachricht mittels der mit der Datenverarbeitungseinheit (12) in Verbindung stehenden Kommunikationseinheit (17) durch Bluetooth Advertise Nachrichten des Bluetooth-Übertragungsprotokolls auszusenden.

3. Überwachungsmodul (10) nach Anspruch 1 oder 2, **dadurch gekennzeichnet, dass** das Überwachungsmodul (10) mittels der Datenverarbeitungseinheit (12) eingerichtet ist, die zeitdiskreten Abstände und/oder eine Intensität der Überwachungsaktivität des Überwachungsmoduls (10) in Abhängigkeit von
- einem erfassten Zustandsparameter und/oder einer davon abgeleiteten Zustandsinformation,
- einer aus einer sensorisch erfassten Bewegungsinformation ermittelten Bewegungs- und/oder Ruhephase des Transportgutes (200), und/oder
- einer Eigenschaft eines Transport- und/oder Prozessabschnittes, innerhalb dessen sich das Überwachungsmodul (10) befindet,
festzulegen.

4. Überwachungsmodul (10) nach einem der vorhergehenden Ansprüche, **dadurch gekennzeichnet, dass** das Überwachungsmodul (10) eingerichtet ist, einen Transport- und/oder Prozessabschnittes (310, 320, 330, 410, 510), innerhalb dessen sich das Überwachungsmodul (10) gerade befindet, in Abhängigkeit von einer von einer Abschnittskontrolleinrichtung ausgesendeten und von dem Überwachungsmodul (10) empfangenen Abschnittskontrollnachricht zu identifizieren.

5. Überwachungsmodul (10) nach einem der vorhergehenden Ansprüche, **dadurch gekennzeichnet, dass** das Überwachungsmodul (10) eine optische Erkennungseinrichtung (20) hat und weiterhin eingerichtet ist, mittels der Kommunikationseinheit (17) eine Identifikationsnachricht zu empfangen und in Abhängigkeit von der empfangenen Identifikationsnachricht die optische Erkennungseinrichtung (20) zur optischen Identifikation des Überwachungsmoduls (10) anzusteuern.

6. Überwachungsmodul (10) nach einem der vorhergehenden Ansprüche, **dadurch gekennzeichnet, dass** einer der Sensoren ein Temperatursensor (16) zum Erfassen der Temperatur des Transportgutes (200) und/oder der Umgebung des Transportgutes (200) ist und/oder dass einer der Sensoren ein Bewegungs- und/oder Beschleunigungssensor (15) zum Erfassen einer Bewegung und/oder Beschleunigung des Transportgutes (200) ist.

7. Überwachungssystem (100) zur Zustandsüberwachung von beweglichen Transportgütern, wobei das Überwachungssystem (100) aufweist:
- eine Vielzahl von Überwachungsmodulen (10), die jeweils ein Gehäuse (11) mit einer Befestigungseinrichtung zum Befestigen des Überwachungsmoduls (10) an einem beweglichen Transportgut (200), eine Datenverarbeitungseinheit (12), ein oder mehrere Sensoren zum Erfassen von Zustandsparametern des beweglichen Transportgutes (200) und/oder des Überwachungsmoduls (10) selbst sowie eine Kommunikationseinheit (17) zur drahtlosen Kurzdistanzübertragung haben,
- wobei jedes Überwachungsmodul (10) eingerichtet ist, eine Zustandsnachricht mit einer dem Überwachungsmodul (10) zugeordneten eindeutigen Kennung sowie den erfassten Zustandsparametern und/oder davon abgeleiteten Zustandsinformationen mittels der mit der Datenverarbeitungseinheit (12) in Verbindung stehenden Kommunikationseinheit (17) auszusenden, und
- eine Mehrzahl von Abschnittskontrolleinrichtungen (30, 31), die jeweils einem Transport- und/oder Prozessabschnitt zugeordnet sind und die jeweils eine Datenverarbeitungseinheit (12) und eine Kommunikationseinheit (17) zum drahtlosen Kommunizieren mit den Überwachungsmodulen (10) haben,
- wobei die Abschnittskontrolleinrichtungen (30, 31) zum Empfang der von den Überwachungsmodulen (10) ausgesendeten Zustandsnachrichten und zum Überwachen des dem jeweiligen sendenden Überwachungsmodul (10) zugeordneten Transportgutes (200) in Abhängigkeit von den erfassten Zustandsparametern und/oder den davon abgeleiteten Zustandsinformationen der empfangenen Zustandsnachricht eingerichtet ist, und
- wobei die Abschnittskontrolleinrichtungen (30, 31) zum Aussenden von Abschnittskontrollnachrichten mittels ihrer jeweiligen Kommunikationseinheit (17) ausgebildet sind und die Überwachungsmodule (10) eingerichtet sind, eine ausgesendete Abschnittskontrollnachricht zu empfangen und in Abhängigkeit von der empfangenen Abschnittskontrollnachricht festzustellen, welchem Transport- und/oder Prozessabschnitt die Abschnittskontrolleinrichtung, welche die Abschnittskontrollnachricht ausgesendet hat, zugeordnet ist und in Abhängigkeit davon in welchem Transport- und/oder Prozessabschnitt sich das die Abschnittskontrollnachricht empfangene Überwachungsmodul (10) befindet.

8. Überwachungssystem (100) nach Anspruch 7, **dadurch gekennzeichnet, dass** ein, mehrere oder alle Überwachungsmodule (10) des Überwachungssystems (100) jeweils ein Überwachungsmodul (10) gemäß einem der Ansprüche 1 bis 6 sind.

9. Überwachungssystem (100) nach Anspruch 7 oder 8, **dadurch gekennzeichnet, dass** ein, mehrere oder alle Abschnittskontrolleinrichtungen mehrere gerichtete Antennen zum Empfang der von den Überwachungsmodulen (10) ausgesendeten Zustandsnachrichten haben und eingerichtet sind, eine Bewegungsrichtung des sich durch den Transport- und/oder Prozessabschnitt bewegenden Transportgutes (200) mit Überwachungsmodul (10) in Abhängigkeit von einer Signalveränderung der durch die mehreren gerichteten Antennen empfangenen Zustandsnachrichten eines jeweiligen Überwachungsmoduls (10) zu ermitteln.

10. Überwachungssystem (100) nach einem der Ansprüche 7 bis 9, **dadurch gekennzeichnet, dass** das Überwachungssystem (100) eingerichtet ist, einen Übergang eines Transportgutes (200) mit Überwachungsmodul (10) von einem ersten Transport- und/oder Prozessabschnitt mit einer ersten Abschnittskontrolleinrichtung in einen zweiten Transport- und/oder Prozessabschnitt mit einer zweiten Abschnittskontrolleinrichtung in Abhängigkeit von dem Empfang mindestens einer Zustandsnachricht an der zweiten Abschnittskontrolleinrichtung zu erkennen.

11. Überwachungssystem (100) nach einem der Ansprüche 7 bis 10, **dadurch gekennzeichnet, dass** eine, mehrere oder alle Abschnittskontrolleinrichtungen zum Aussenden von Abschnittskontrollnachrichten derart ausgebildet sind, dass die jeweilige Abschnittskontrollnachricht eine Eigenschaft des der jeweiligen Abschnittskontrolleinrichtung zugeordneten Transport- und/oder Prozessabschnitt enthalten, wobei ein, mehrere oder alle Überwachungsmodule (10) eingerichtet sind, eine Eigenschaft des Transport- und/oder Prozessabschnittes, innerhalb dessen sich das Überwachungsmodul (10) gerade befindet, in Abhängigkeit von einer empfangenen Abschnittskontrollnachricht zu ermitteln und zeitdiskrete Abstände zwischen dem Aussenden der Zustandsnachrichten und/oder eine Intensität der Überwachungsaktivität des Überwachungsmoduls (10) in Abhängigkeit von der ermittelten Eigenschaft des Transport- und/oder Prozessabschnittes, innerhalb dessen sich das Überwachungsmodul (10) befindet, festzulegen.

12. Überwachungssystem (100) nach einem der Ansprüche 7 bis 11, **dadurch gekennzeichnet, dass** eine, mehrere oder alle Abschnittskontrolleinrichtungen zum Aussenden einer Identifikationsnachricht zum Identifizieren eines Überwachungsmoduls (10) und/oder einer Gruppe von Überwachungsmodulen (10) ausgebildet sind, wobei die Überwachungsmodule (10) eine optische Erkennungseinrichtung (20) haben und weiterhin eingerichtet sind, mittels der Kommunikationseinheit (17) die Identifikationsnachricht zu empfangen und in Abhängigkeit von der empfangenen Identifikationsnachricht die optische Erkennungseinrichtung (20) zur optischen Identifikation des jeweiligen betreffenden Überwachungsmoduls (10) anzusteuern.

13. Verfahren zur Zustandsüberwachung von beweglichen Transportgütern mittels eines Überwachungssystems (100), **gekennzeichnet durch** die Schritte:
- Bereitstellen eines Überwachungssystems (100) mit den Merkmalen nach einem der Ansprüche 7 bis 12,
- Empfangen der von den Überwachungsmodulen (10) ausgesendeten Zustandsnachrichten durch wenigstens eine Abschnittskontrolleinrichtung und Überwachen des dem jeweiligen sendenden Überwachungsmodul (10) zugeordneten Transportgutes (200) in Abhängigkeit von den erfassten Zustandsparametern und/oder den davon abgeleiteten Zustandsinformationen der empfangenen Zustandsnachricht, und
- Aussenden von Abschnittskontrollnachrichten mittels einer Kommunikationseinheit (17) einer Abschnittskontrolleinrichtung und Empfangen einer ausgesendeten Abschnittskontrollnachricht durch ein oder mehrere Überwachungsmodule (10), wobei durch die empfangenen Überwachungsmodule (10) festgestellt wird, welchem Transport- und/oder Prozessabschnitt die Abschnittskontrolleinrichtung, welche die Abschnittskontrollnachricht ausgesendet hat, zugeordnet ist und in Abhängigkeit davon in welchem Transport- und/oder Prozessabschnitt sich das die Abschnittskontrollnachricht empfangene Überwachungsmodul (10) befindet.

## Geänderte Patentansprüche

### Geänderte Patentansprüche gemäss Regel 137(2) EPÜ.

1. Überwachungsmodul (10) zur Zustandsüberwachung von beweglichen Transportgütern, wobei das Überwachungsmodul aufweist:
- ein Gehäuse (11) mit einer Befestigungseinrichtung, die zum Befestigen des Überwachungsmoduls (10) an einem beweglichen Transportgut (200) ausgebildet ist,
- eine Datenverarbeitungseinheit (12),
- ein oder mehrere Sensoren (15, 16), die zum Erfassen von Zustandsparametern des beweglichen Transportgutes (200) und/oder des Überwachungsmoduls (10) ausgebildet und mit der Datenverarbeitungseinheit (12) in Verbindung stehen, und
- einer Kommunikationseinheit (17), die zur drahtlosen Kurzdistanzübertragung ausgebildet ist,
- wobei das Überwachungsmodul (10) eingerichtet ist, eine Zustandsnachricht mit einer dem Überwachungsmodul (10) zugeordneten eindeutigen Kennung sowie den erfassten Zustandsparametern und/oder davon abgeleiteten Zustandsinformationen mittels der mit der Datenverarbeitungseinheit (12) in Verbindung stehenden Kommunikationseinheit (17) in zeitdiskreten Abständen im Broadcastverfahren mit einem drahtlosen Kurzdistanz-Übertragungsprotokoll auszusenden,
**dadurch gekennzeichnet, dass** das Überwachungsmodul (10) mittels der Datenverarbeitungseinheit (12) eingerichtet ist, die zeitdiskreten Abstände und/oder eine Intensität der Überwachungsaktivität des Überwachungsmoduls (10) in Abhängigkeit von
- einem erfassten Zustandsparameter und/oder einer davon abgeleiteten Zustandsinformation,
- einer aus einer sensorisch erfassten Bewegungsinformation ermittelten Bewegungs- und/oder Ruhephase des Transportgutes (200), und/oder
- einer Eigenschaft eines Transport- und/oder Prozessabschnittes, innerhalb dessen sich das Überwachungsmodul (10) befindet,
festzulegen.

2. Überwachungsmodul (10) nach Anspruch 1, **dadurch gekennzeichnet, dass** das Überwachungsmodul (10) eingerichtet ist, die Zustandsnachricht mittels der mit der Datenverarbeitungseinheit (12) in Verbindung stehenden Kommunikationseinheit (17) durch Bluetooth Advertise Nachrichten des Bluetooth-Übertragungsprotokolls auszusenden.

3. Überwachungsmodul (10) nach einem der vorhergehenden Ansprüche, **dadurch gekennzeichnet, dass** das Überwachungsmodul (10) eingerichtet ist, einen Transport- und/oder Prozessabschnittes (310, 320, 330, 410, 510), innerhalb dessen sich das Überwachungsmodul (10) gerade befindet, in Abhängigkeit von einer von einer Abschnittskontrolleinrichtung ausgesendeten und von dem Überwachungsmodul (10) empfangenen Abschnittskontrollnachricht zu identifizieren.

4. Überwachungsmodul (10) nach einem der vorhergehenden Ansprüche, **dadurch gekennzeichnet, dass** das Überwachungsmodul (10) eine optische Erkennungseinrichtung (20) hat und weiterhin eingerichtet ist, mittels der Kommunikationseinheit (17) eine Identifikationsnachricht zu empfangen und in Abhängigkeit von der empfangenen Identifikationsnachricht die optische Erkennungseinrichtung (20) zur optischen Identifikation des Überwachungsmoduls (10) anzusteuern.

5. Überwachungsmodul (10) nach einem der vorhergehenden Ansprüche, **dadurch gekennzeichnet, dass** einer der Sensoren ein Temperatursensor (16) zum Erfassen der Temperatur des Transportgutes (200) und/oder der Umgebung des Transportgutes (200) ist und/oder dass einer der Sensoren ein Bewegungs- und/oder Beschleunigungssensor (15) zum Erfassen einer Bewegung und/oder Beschleunigung des Transportgutes (200) ist.

6. Überwachungssystem (100) zur Zustandsüberwachung von beweglichen Transportgütern, wobei das Überwachungssystem (100) aufweist:
- eine Vielzahl von Überwachungsmodulen (10), die jeweils ein Gehäuse (11) mit einer Befestigungseinrichtung zum Befestigen des Überwachungsmoduls (10) an einem beweglichen Transportgut (200), eine Datenverarbeitungseinheit (12), ein oder mehrere Sensoren zum Erfassen von Zustandsparametern des beweglichen Transportgutes (200) und/oder des Überwachungsmoduls (10) selbst sowie eine Kommunikationseinheit (17) zur drahtlosen Kurzdistanzübertragung haben,
- wobei jedes Überwachungsmodul (10) eingerichtet ist, eine Zustandsnachricht mit einer dem Überwachungsmodul (10) zugeordneten eindeutigen Kennung sowie den erfassten Zustandsparametern und/oder davon abgeleiteten Zustandsinformationen mittels der mit der Datenverarbeitungseinheit (12) in Verbindung stehenden Kommunikationseinheit (17) auszusenden, und
- eine Mehrzahl von Abschnittskontrolleinrichtungen (30, 31), die jeweils einem Transport- und/oder Prozessabschnitt zugeordnet sind und die jeweils eine Datenverarbeitungseinheit (12) und eine Kommunikationseinheit (17) zum drahtlosen Kommunizieren mit den Überwachungsmodulen (10) haben,
- wobei die Abschnittskontrolleinrichtungen (30, 31) zum Empfang der von den Überwachungsmodulen (10) ausgesendeten Zustandsnachrichten und zum Überwachen des dem jeweiligen sendenden Überwachungsmodul (10) zugeordneten Transportgutes (200) in Abhängigkeit von den erfassten Zustandsparametern und/oder den davon abgeleiteten Zustandsinformationen der empfangenen Zustandsnachricht eingerichtet ist, und
- wobei die Abschnittskontrolleinrichtungen (30, 31) zum Aussenden von Abschnittskontrollnachrichten mittels ihrer jeweiligen Kommunikationseinheit (17) ausgebildet sind und die Überwachungsmodule (10) eingerichtet sind, eine ausgesendete Abschnittskontrollnachricht zu empfangen und in Abhängigkeit von der empfangenen Abschnittskontrollnachricht festzustellen, welchem Transport- und/oder Prozessabschnitt die Abschnittskontrolleinrichtung, welche die Abschnittskontrollnachricht ausgesendet hat, zugeordnet ist und in Abhängigkeit davon in welchem Transport- und/oder Prozessabschnitt sich das die Abschnittskontrollnachricht empfangene Überwachungsmodul (10) befindet
- wobei ein, mehrere oder alle Überwachungsmodule (10) des Überwachungssystems (100) jeweils ein Überwachungsmodul (10) gemäß einem der Ansprüche 1 bis 5 sind.

7. Überwachungssystem (100) nach Anspruch 6, **dadurch gekennzeichnet, dass** ein, mehrere oder alle Abschnittskontrolleinrichtungen mehrere gerichtete Antennen zum Empfang der von den Überwachungsmodulen (10) ausgesendeten Zustandsnachrichten haben und eingerichtet sind, eine Bewegungsrichtung des sich durch den Transport- und/oder Prozessabschnitt bewegenden Transportgutes (200) mit Überwachungsmodul (10) in Abhängigkeit von einer Signalveränderung der durch die mehreren gerichteten Antennen empfangenen Zustandsnachrichten eines jeweiligen Überwachungsmoduls (10) zu ermitteln.

8. Überwachungssystem (100) nach Anspruch 6 oder 7, **dadurch gekennzeichnet, dass** das Überwachungssystem (100) eingerichtet ist, einen Übergang eines Transportgutes (200) mit Überwachungsmodul (10) von einem ersten Transport- und/oder Prozessabschnitt mit einer ersten Abschnittskontrolleinrichtung in einen zweiten Transport- und/oder Prozessabschnitt mit einer zweiten Abschnittskontrolleinrichtung in Abhängigkeit von dem Empfang mindestens einer Zustandsnachricht an der zweiten Abschnittskontrolleinrichtung zu erkennen.

9. Überwachungssystem (100) nach einem der Ansprüche 6 bis 8, **dadurch gekennzeichnet, dass** eine, mehrere oder alle Abschnittskontrolleinrichtungen zum Aussenden von Abschnittskontrollnachrichten derart ausgebildet sind, dass die jeweilige Abschnittskontrollnachricht eine Eigenschaft des der jeweiligen Abschnittskontrolleinrichtung zugeordneten Transport- und/oder Prozessabschnitt enthalten, wobei ein, mehrere oder alle Überwachungsmodule (10) eingerichtet sind, eine Eigenschaft des Transport- und/oder Prozessabschnittes, innerhalb dessen sich das Überwachungsmodul (10) gerade befindet, in Abhängigkeit von einer empfangenen Abschnittskontrollnachricht zu ermitteln und zeitdiskrete Abstände zwischen dem Aussenden der Zustandsnachrichten und/oder eine Intensität der Überwachungsaktivität des Überwachungsmoduls (10) in Abhängigkeit von der ermittelten Eigenschaft des Transport- und/oder Prozessabschnittes, innerhalb dessen sich das Überwachungsmodul (10) befindet, festzulegen.

10. Überwachungssystem (100) nach einem der Ansprüche 6 bis 9, **dadurch gekennzeichnet, dass** eine, mehrere oder alle Abschnittskontrolleinrichtungen zum Aussenden einer Identifikationsnachricht zum Identifizieren eines Überwachungsmoduls (10) und/oder einer Gruppe von Überwachungsmodulen (10) ausgebildet sind, wobei die Überwachungsmodule (10) eine optische Erkennungseinrichtung (20) haben und weiterhin eingerichtet sind, mittels der Kommunikationseinheit (17) die Identifikationsnachricht zu empfangen und in Abhängigkeit von der empfangenen Identifikationsnachricht die optische Erkennungseinrichtung (20) zur optischen Identifikation des jeweiligen betreffenden Überwachungsmoduls (10) anzusteuern.

11. Verfahren zur Zustandsüberwachung von beweglichen Transportgütern mittels eines Überwachungssystems (100), **gekennzeichnet durch** die Schritte:
- Bereitstellen eines Überwachungssystems (100) mit den Merkmalen nach einem der Ansprüche 6 bis 10,
- Empfangen der von den Überwachungsmodulen (10) ausgesendeten Zustandsnachrichten durch wenigstens eine Abschnittskontrolleinrichtung und Überwachen des dem jeweiligen sendenden Überwachungsmodul (10) zugeordneten Transportgutes (200) in Abhängigkeit von den erfassten Zustandsparametern und/oder den davon abgeleiteten Zustandsinformationen der empfangenen Zustandsnachricht, und
- Aussenden von Abschnittskontrollnachrichten mittels einer Kommunikationseinheit (17) einer Abschnittskontrolleinrichtung und Empfangen einer ausgesendeten Abschnittskontrollnachricht durch ein oder mehrere Überwachungsmodule (10), wobei durch die empfangenen Überwachungsmodule (10) festgestellt wird, welchem Transport- und/oder Prozessabschnitt die Abschnittskontrolleinrichtung, welche die Abschnittskontrollnachricht ausgesendet hat, zugeordnet ist und in Abhängigkeit davon in welchem Transport- und/oder Prozessabschnitt sich das die Abschnittskontrollnachricht empfangene Überwachungsmodul (10) befindet.
